(19) Europäisches Patentamt

European Patent Office

Office européen des brevets

(11) **EP 0 935 055 B1**

(12) **EUROPEAN PATENT SPECIFICATION**

(45) Date of publication and mention
of the grant of the patent:
**11.01.2006 Bulletin 2006/02**

(51) Int Cl.:
*F01N 3/08* (2006.01)  *B01D 53/94* (2006.01)
*B01J 35/00* (2006.01)  *B01J 37/02* (2006.01)

(21) Application number: **99300857.2**

(22) Date of filing: **05.02.1999**

(54) **Method for purifying oxygen rich exhaust gas**

Verfahren zur Reinigung von hochsauerstoffhaltigen Abgasen

Procédé de purification de gaz d'échappement riche en oxygène

(84) Designated Contracting States:
**DE GB**

(30) Priority: **05.02.1998 JP 2451598**
**30.10.1998 JP 30965498**

(43) Date of publication of application:
**11.08.1999 Bulletin 1999/32**

(73) Proprietor: **NISSAN MOTOR COMPANY, LIMITED**
**Yokohama-shi,**
**Kanagawa 221-0023 (JP)**

(72) Inventor: **Kamikubo, Maki**
**Yokosuka-shi,**
**Kanagawa 237-0066 (JP)**

(74) Representative: **Godwin, Edgar James**
**Marks & Clerk**
**90 Long Acre**
**London WC2E 9RA (GB)**

(56) References cited:
**EP-A- 0 749 774**   **EP-A- 0 984 142**
**US-A- 5 471 836**

• PATENT ABSTRACTS OF JAPAN vol. 016, no. 298 (C-0958), 2 July 1992 (1992-07-02) & JP 04 083516 A (NIPPON SHOKUBAI CO LTD), 17 March 1992 (1992-03-17)
• PATENT ABSTRACTS OF JAPAN vol. 018, no. 465 (M-1665), 30 August 1994 (1994-08-30) & JP 06 146869 A (HITACHI LTD), 27 May 1994 (1994-05-27)

**Description**

The present invention relates to a method of purifying oxygen rich exhaust gas, in particular using a catalyst (catalytic converter) that is capable of removing NOx contained in the oxygen rich exhaust gas.

There has been a strong demand for lean-burn automobiles. Such a lean-burn automobile is driven on the lean side with a large air-fuel ratio (A/F) during ordinary driving, so as to burn an oxygen rich air-fuel mixture and thereby meet with the demands for lower fuel consumption. In case of an oxygen rich (lean) air-fuel mixture, the oxygen content of the exhaust gas after combustion becomes high. If this exhaust gas is allowed to flow through a conventional three-way catalyst, the oxidation action becomes more active and the reduction action becomes inactive. That is, it becomes easy to oxidize hydrocarbons (HC) and carbon monoxide (CO) into $CO_2$ and $H_2O$ by oxygen, but it becomes difficult to reduce NOx into $N_2$ in an oxygen-rich exhaust gas. In view of this, it has been desired to provide a catalyst that can efficiently remove NOx from an exhaust gas on the lean side, that is, an oxygen rich exhaust gas.

Each of JP-A-1-127044 and JP-A-5-68888 discloses an exhaust gas purifying catalyst having a first layer containing a catalytic component (noble metal) and a second layer containing zeolite. JP-A-1-310742 discloses another zeolite catalytic layer containing copper by ion exchange and noble metal. JP-5-168939 discloses another catalyst containing a metal-containing silicate having noble and transition metals loaded thereon. Heisei-9th (1997) Shokubai Kenkyu Happyoukai (Presentation of Catalyst Studies) Koen Yokoushu (Proceeding) 3A01, pp. 61 discloses that cobalt phosphate, loaded with Pt, and gallium phosphate each have NOx reducing activity. JP-A-6-55075 discloses an exhaust gas purifying catalyst made of a phosphate loaded with at least one metal having a catalytic activity. JP-A-4-83516 discloses a method for removing NOx by using a first catalytic layer, in which fuel is introduced and decomposed, and a second catalytic layer, where NOx is decomposed in the presence of the decomposed fuel. JP-A-6-146869 discloses an exhaust gas purifying device having a hydrocarbon adsorbent disposed downstream of a NOx reducing catalyst. JP-A-10-57763 discloses an exhaust gas purifying catalyst in which a hydrocarbon adsorbing layer is interposed between a substrate and a catalyst loaded layer. JP-A-5-321655 discloses a method for purifying a diesel engine exhaust gas, in which a first catalyst, having a transition-metal-containing crystalline silicate, and a second three-way catalyst are disposed in the exhaust passage. JP-A-7-19031 discloses an exhaust gas purifying device having a NOx reducing catalyst, a hydrocarbon adsorbent, and a means for adding hydrocarbons. Each of JP-A-7-124479 and JP-A-7-144134 discloses an exhaust gas purifying catalyst containing a crystalline aluminosilicate (zeolite) having Cu and at least one selected from B, P, Sb, and Bi. JP-B2-2600492 discloses an exhaust gas purifying device having a NOx adsorbent that absorbs NOx on the lean side and releases the absorbed NOx when the oxygen concentration of the exhaust gas is lowered.

It is an object of the present invention to provide a method of purifying an exhaust gas, which is capable of purifying NOx contained in an oxygen rich exhaust gas, when the exhaust gas temperature and the HC/NOx ratio of the exhaust gas are each low.

US-A-5 471 836 discloses a device for purifying an exhaust gas. This device comprises a NOx-adsorbing-and-reducing material (catalyst) that is capable of adsorbing a NOx and accelerating a reduction of the adsorbed NOx into $N_2$, within a $NO_2$-forming temperature range where a reaction represented by the following formula (1) proceeds,

$$2NO+O_2 \rightarrow 2NO_2 \qquad (1)$$

EP-A-984 142 (published 08.03.2000) discloses an HC-absorbing material arranged upstream of a $NO_x$-absorbing-and-reducing material.

The present invention provides a method of purifying an exhaust gas as set forth in claim 1.

BRIEF DESCRIPTION OF THE DRAWINGS

Fig. 1 is a sectional view showing an exemplary catalytic converter for performing a method according to the present invention, having upstream and downstream catalysts;

Fig. 2 is an enlarged sectional view showing an exemplary downstream catalyst according to a first preferred embodiment, having first, second, and third catalytic layers formed on a substrate;

Fig. 3 is a view similar to Fig. 2, but showing another exemplary downstream catalyst according to a second preferred embodiment, having a single catalytic layer formed on a substrate; and

Fig. 4 is a graph showing the variation of the percentage of the removal of hydrocarbons (HC) and NOx from the exhaust gas with the catalyst temperature of the catalytic converter according to Example 26.

**EP 0 935 055 B1**

DESCRIPTION OF THE PREFERRED EMBODIMENTS

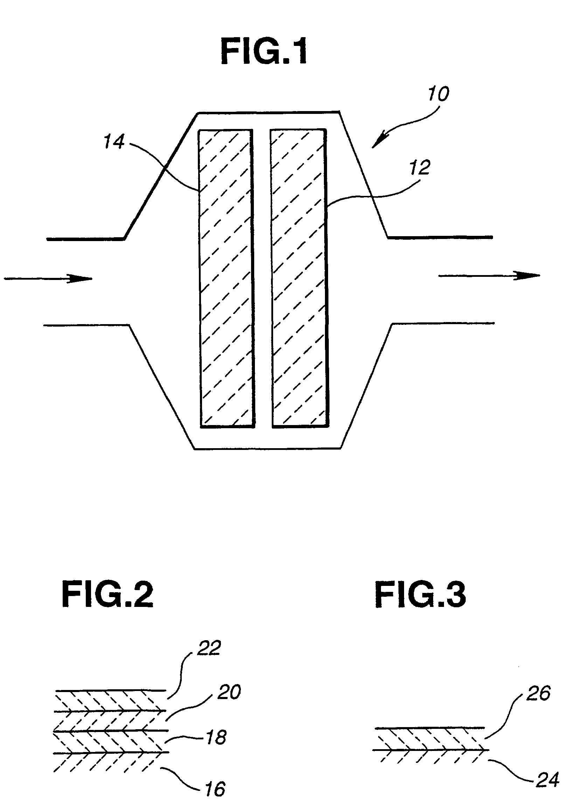

A method of purifying an exhaust gas according to the present invention will be described in detail in the following. As is seen from Fig. 1, this device 10, that is, an exhaust gas purifying catalyst or catalytic converter, comprises a hydrocarbon-adsorbing-and-desorbing material and a NOx-adsorbing-and-reducing material (catalyst) arranged in the exhaust gas passage. The NOx-adsorbing-and-reducing material is downstream of the hydrocarbon-adsorbing-and-desorbing material in the exhaust gas passage. Thus, hereinafter, the NOx-adsorbing-and-reducing material and the hydrocarbon-adsorbing-and-desorbing material will also respectively be referred to as downstream and upstream catalysts 12, 14 (see Fig. 1). The hydrocarbon-adsorbing-and-desorbing material may efficiently adsorb or trap hydrocarbons, when the exhaust gas has a low temperature (e.g., less than 300°C), and then may desorb or release the adsorbed hydrocarbons at one time when the exhaust gas temperature increases to a temperature that is necessary for reducing NOx (e.g., at least 300°C). NOx is efficiently selectively reduced by the hydrocarbons desorbed from the hydrocarbon-adsorbing-and-desorbing material, at the NOx-adsorbing-and-reducing material, by arranging the NOx-adsorbing-and-reducing material downstream of the hydrocarbon-adsorbing-and-desorbing material. In other words, the hydrocarbon concentration of the exhaust gas may be varied or increased at an inlet of the NOx-adsorbing-and-reducing material (catalyst) by desorbing hydrocarbons from the hydrocarbon-adsorbing-and-desorbing material. Then, the desorbed hydrocarbons may efficiently selectively be brought into contact with NOx adsorbed on the NOx-adsorbing-and-reducing material. Therefore, the desorbed hydrocarbons may not be oxidized by oxygen of the exhaust gas, but may selectively be oxidized by the adsorbed NOx, even though the exhaust gas contains an excessive amount of oxygen (e.g., A/F is at least 18), and at the same time the NOx may be reduced to $N_2$.

The volume ratio of the upstream catalyst to the downstream catalyst is preferably within a range from 1:6 to 1:1. Within this range, the NOx purification capability of the catalytic converter improves particularly. If it is less than 1:6, the hydrocarbon trap effect may become insufficient. If it is greater than 1:1, heat capacity of the upstream catalyst may become too large. This may interfere with the activity of the downstream catalyst in reducing NOx at a low temperature.

The conditions for using the device 10 are not particularly limited. The device is capable of purifying an oxygen-rich exhaust gas exhausted from an engine driven with an air-fuel ratio (A/F) of at least 14.7 (14.7 is the stoichiometric A/F), particularly an A/F of at least 18. This exhaust gas, which is to be purified by the device 10, may contain hydrocarbons, carbon monoxide, NOx, etc. and has an oxygen concentration of at least 5%, a molar ratio of hydrocarbons to NOx of up to 10, and a low temperature of about 100-450°C. If the exhaust gas has a too-low oxygen concentration and a too-high hydrocarbon concentration, so-called "caulking" on the catalyst surface (i.e., hydrocarbon deposition on the catalyst surface) may occur. This may accelerate catalyst deterioration. It is possible to use the catalytic converter for a long time with a high exhaust-gas purification capability by adjusting the exhaust gas to have an oxygen concentration of at least 5% and a molar ratio of hydrocarbons to NOx of up to 10. According to the invention, it is not necessary to intentionally adjust the A/F to the stoichiometric A/F or the rich side for the purpose of reducing NOx. In other words, an exhaust gas that is always on the lean side, particularly that from an engine always driven with an A/F of at least 18, can effectively be purified by the device 10.

Furthermore, it is not necessary to add a hydrocarbon(s) as a reducing agent into a lean-burn exhaust gas. It should be noted that a fuel-rich exhaust gas caused by the acceleration, etc. can also be purified by the device 10. The upstream and downstream catalysts may be prepared by forming catalytic coatings on honeycomb monolithic substrates, respectively. The material of each substrate is not particularly limited. It may be a ceramic (e.g., cordierite) or metal material (e.g., ferrite-based stainless steel). It is optional to form catalytic coatings themselves of the upstream and downstream catalysts into honeycomb shape. If the upstream and downstream catalysts are in honeycomb shape, the contact area between the catalyst and an exhaust gas becomes substantially large. Furthermore, the pressure loss does not become so large. Therefore, a honeycomb shape catalyst is particularly preferably as an automotive catalyst, which is used under a certain vibration and is required to treat a large amount of exhaust gas in a limited space. It is easy to prepare a multilayered catalytic coating, which has a plurality of layers having different functions, by forming the coating on a honeycomb shape substrate. The number of the upstream and downstream catalysts is not particularly limited, so long as the device has at least one upstream catalyst and at least one downstream catalyst. For example, the device may have two downstream catalysts per one upstream catalyst. Furthermore, the device may have at least two pairs of upstream and downstream catalysts.

The upstream catalyst 14 adsorbs hydrocarbons of the exhaust gas at a first temperature lower than a value T°C that is within a $NO_2$-forming temperature range and desorbs the hydrocarbons at a second temperature that is not lower than the value T°C. The downstream catalyst 12 adsorbs NOx of the exhaust gas within the $NO_2$-forming temperature range and is capable of accelerating a reduction of the NOx into $N_2$ at the second temperature, which is not lower than the value T°C. The capability of reducing NOx of the downstream catalyst does not, however, depend on the $NO_2$-forming temperature range. The $NO_2$ forming temperature range is preferably lower than 350°C. It is preferable to select a suitable hydrocarbon-adsorbing-and-desorbing material as the upstream catalyst, depending on the type of hydrocarbons contained in the exhaust gas, in order to adjust the above-mentioned value T°C to be lower than 300°C.

3

Accordingly, the device for purifying exhaust gas preferably comprises a hydrocarbon-adsorbing-and-desorbing material (upstream catalyst) which adsorbs hydrocarbons at a temperature range lower than 300°C and desorbs the hydrocarbons at a temperature range not lower than 300°C, and a NOx-adsorbing-and-reducing material (downstream catalyst) which adsorbs NOx at a temperature range lower than 300°C and accelerates the NOx reduction at a temperature range not lower than 300°C. In fact, when an exhaust gas flowing through the upstream catalyst has a temperature lower than 300°C, such as shortly after the cold-start of the engine, the amount of hydrocarbons flowing towards the downstream catalyst decreases due to the adsorption of hydrocarbons on the upstream catalyst. Under this condition, a substantially large amount of NOx is adsorbed on the downstream catalyst, thereby to highly effectively remove NOx from a low-temperature exhaust gas. When an exhaust gas flowing through the upstream catalyst has a temperature not lower than 300°C, hydrocarbons desorbed from the upstream flows through the downstream catalyst. With this, these hydrocarbons are brought into contact with the adsorbed NOx in the downstream catalyst. Upon this, the molar ratio of HC/NOx becomes substantially high on the surface of the downstream catalyst. Therefore, NOx is effectively reduced by the desorbed hydrocarbons. The NOx adsorbed on the downstream catalyst is assumed to have a higher reactivity, such that this NOx is assumed to be easily reduced by the desorbed hydrocarbons. When an exhaust gas flowing through the upstream catalyst has a temperature lower than 300°C, NOx is removed basically by adsorption. Thus, even if a Pt-based catalyst is used in the downstream catalyst, it becomes possible to suppress the generation of $N_2O$, which is one of global warming gases.

The hydrocarbon-adsorbing-and-desorbing material of the upstream catalyst preferably comprises at least one zeolite selected from the group consisting of MFI zeolite, Y-type zeolite, mordenite, and β -zeolite. The at least one zeolite is capable of efficiently adsorbing hydrocarbons. Of Y-type zeolites, USY-type zeolite is preferably used for the purpose of improving the catalyst in hydrothermal resistance. Each zeolite used in the invention is preferably subjected to hydrothermal treatment, re-synthesis, and the like, in order to increase crystallinity. With this, it may become possible to obtain a catalyst that is high in heat resistance and durability. The above-mentioned MFI zeolite, Y-type zeolite, mordenite, and β-zeolite are respectively preferably within ranges of 20-1,000, 4-50, 9-25, and 20-150, with respect to the molar ratio of silica to alumina of these zeolites. If the ratio is lower than the corresponding range, the zeolite skeleton may become unstable. If the ratio is higher than the corresponding range, the zeolite may become insufficient in retention of hydrocarbons. Thus, the zeolite of the upstream catalyst may not sufficiently retain hydrocarbons until the downstream catalyst starts the NOx reduction. The at least one zeolite of the upstream catalyst is preferably in an amount of 30-300 g per liter of the upstream catalyst. With this, the upstream catalyst does not become too large in heat capacity and thus does not interfere with the activity of the downstream catalyst.

It is preferable that the at least one zeolite of the upstream catalyst supports thereon a NOx-reducing component that is at least one metal selected from the group consisting of copper, cobalt, iron, manganese, silver, indium, iridium, and rhodium. With this, the upstream catalyst is provided with the capability of reducing NOx. Thus, the exhaust gas can more efficiently be purified. The amount of the NOx-reducing component is preferably from 1 to 20 wt%. With this, NOx can more efficiently be purified upon the desorption of hydrocarbons from the zeolite of the upstream catalyst.

Furthermore, it is optional to add a phosphate to the upstream catalyst for the purpose of improving the capability of desorbing hydrocarbons and accelerating the NOx purification. This phosphate may be at least one phosphate of at least one element selected from the group consisting of Cu, Ag, Mg, Zn, Sn, Cr, Mo, W, Mn, Co, and Ni. It is assumed that the phosphate of the upstream catalyst serves to modify the adsorbed hydrocarbons, particularly so-called "heavy hydrocarbons" having a larger number of carbons in the molecule(s), into "light hydrocarbons" that have a smaller number of carbons and thus are more active in the NOx reduction than the heavy hydrocarbons, through partial oxidation or oxidative dehydrogenation of the heavy hydrocarbons.

The additive of the upstream catalyst, that is, the above-mentioned NOx-reducing component and/or the phosphate, is preferably loaded on a refractory inorganic support having a specific surface area of at least 60 $m^2$/g. With this, it becomes possible to improve the additive in dispersibility and thus in its function. The refractory inorganic support may be at least one inorganic oxide selected from alumina, silica, zeolite, magnesia, titania, and zirconia. In fact, it is optional to use a binary inorganic oxide, such as silica-alumina, alumina-zirconia, or alumina-magnesia. It is preferable to use zeolite, particularly MFI zeolite or mordenite, as a refractory inorganic support for loading thereon the NOx-reducing component.

In the preparation of the upstream and/or downstream catalyst, metals used therefor may be in the form of mineral salt, carbonate, ammonium salt, organic salt (salt of organic acid), oxide, sodium salt, ammine complex, etc. In particular, such metal is preferably in the form of a water-soluble salt, in order to improve the catalytic capability. The method of loading the metal on a support in the preparation of the catalyst is not particularly limited, and may be one of conventional methods, such as drying through evaporation, deposition, impregnation, and ion-exchange, so long as the distribution of the metal on the support does not become substantially lopsided. In particular, it is preferable to use ion-exchange in loading a metal on zeolite, in order to obtain a sufficient dispersibility of the metal thereon. In cases of ion-exchange and impregnation, the metal may be dissolved in a solution. It is optional to adjust pH of this solution by adding an acid or base thereto. By adjusting pH, it may be possible to regulate the condition of the metal loaded on support and obtain a sufficient heat resistance. The catalyst obtained by loading at least one metal on a support may be ground into a powder and then formed into a slurry. This slurry may be applied to a catalyst substrate, followed by heating at a temperature of 400-900°C, thereby to obtain a catalytic converter of the invention.

The upstream catalyst may be prepared by forming on a substrate a first refractory inorganic oxide layer loaded with the above-mentioned phosphate, and then by forming on the first layer a second refractory inorganic oxide layer loaded with the above-mentioned NOx-reducing component. The resultant laminate of the first and second layers is capable of making each of the NOx-reducing component and phosphate function effectively. In fact, "heavy hydrocarbons" adsorbed on the first layer is modified into "light hydrocarbons" by the phosphate of the first layer, and the light hydrocarbons desorbed from the first layer reduce NOx in the presence of the NOx-reducing component upon passing through the second layer. It is not preferable to reverse the order of the first and second layers. In this case, the light hydrocarbons are released from the first layer loaded with the phosphate, which first layer is formed on the second layer, into the gas phase, without passing through the second layer loaded with the NOx-reducing component. Thus, the light hydrocarbons are not effectively used in reducing NOx.

A downstream catalyst 12 (NOx-adsorbing-and-reducing catalyst) according to a first preferred embodiment will be described in detail in the following. As is seen from Fig. 2, this downstream catalyst 12 comprises a substrate 16 and a laminate of first, second and third catalytic layers 18, 20, 22. The first layer 18 is formed on the substrate 16 and contains (1) at least one first component (noble metal) selected from Pt, Pd,and Rh and (2) at least one second component selected from alkali metals, alkali earth metals,and rare earth elements. Due to the addition of the at least one noble metal, the first layer is provided with oxidation power for oxidizing NO to $NO_2$. Under the lean condition, this $NO_2$ is absorbed into the first layer, for example, in the form of $Ba(NO_3)_2$, by removing an excess of the reducing gas component (hydrocarbons). In other words, if the amount of hydrocarbons is excessive, for example, $Ba(NO_3)_2$ is decomposed into Ba and $NO_2$. The amount of the at least one noble metal is not particularly limited, so long as it becomes possible to obtain a sufficient NOx absorption capability and a sufficient three-way catalytic capability. The amount of the at least one noble metal is preferably from 0.1 to 10 g per liter of the downstream catalyst. If it is less than 0.1 g, the three-way catalyst capability may become insufficient. An amount greater than 10 g may not bring about a significant advantage(s). It is preferable that the amount of the at least one second component is greater than 0.1 mol and up to 0.6 mol per liter of the downstream catalyst. If it is not greater than 0.1 mol, the amount of NOx absorption may become insufficient. If it is greater than 0.6 mol, the advantageous effect of the addition of the at least one noble metal may be impaired. Regarding the at least one second component, it is preferable to use potassium, lithium, and sodium (sodium is particularly preferable) as the alkali metals; and barium, strontium, calcium,and magnesium as the alkali earth metals; and Y, La, Cs, Ce, Pr, Nd, Pm,and Sm (Cs and Ce are particularly preferable) as the rare earth elements. The first catalytic layer may have a function of oxidizing a NOx into another NOx that has a higher reactivity. Thus, it may increase the activity of a NOx reducing material of the third catalytic layer at a low temperature.

As mentioned above, the downstream catalyst 12 according to the first preferred embodiment comprises the second catalytic layer 20 formed on the first catalytic layer 18 (see Figs. 1 and 2). The second catalytic layer 20 contains alumina and/or silica and is provided in order to separate the first and third catalytic layers 18, 22. The second layer is preferably substantially free of noble metal. Due to the provision of the second layer, it becomes possible to improve the active components of the first and third layers in thermal stability and thus improve the downstream catalyst in durability. If the second layer is omitted, the active components of the first and third layers may react together by the direct contact of these layers. This may make the first and third layers inferior in catalytic activity. The amount of the second layer is preferably from 20 to 100 g per liter of the downstream catalyst. If it is less than 20 g, the second layer may not properly function as a separation layer. If it is greater than 100 g, the exhaust gas may not easily reach the first layer by diffusion.

As mentioned above, the downstream catalyst 12 according to the first preferred embodiment comprises the third catalytic layer 22 formed on the second layer 20 (see Figs. 1 and 2). The third catalytic layer 22 contains a zeolite having copper and/or cobalt. Nonlimitative examples of this zeolite are MFI-type zeolite, Y-type zeolite, mordenite, ferrierite, and β-type zeolite. Of these, MFI-type zeolite and β-type zeolite are preferable, due to their high NOx purification capability. The molar ratio of silica to alumina of the zeolite of the third layer is preferably from 20 to 80. If it is less than 20, the zeolite skeleton may become unstable. Furthermore, the amount of the Cu and/or Co loaded on the zeolite by ion exchange may become excessive. With this; dispersibility of the Cu and/or Co may become inferior, and thus the activity of one active site may substantially decrease. Furthermore, the active sites tend to cohere, for example, at a high temperature, thereby to make the third layer inferior in catalytic activity. This phenomenon is called "sintering". If the molar ratio is greater than 80, the number of the active sites may become too small. This may make the third layer insufficient in catalytic activity. The Cu and/or Co loaded on the zeolite serves to purify NOx of a lean-burn exhaust gas. The amount of the Cu and/or Co is preferably from 0.05 to 0.5 moles per liter of the downstream catalyst. Within this range, the sintering (cohesion of the active sites) does not easily occur by heat. The amount of the third layer is preferably from 120 to 300 g per liter of the downstream catalyst. If it is less than 120 g, the catalytic activity of the third layer may become insufficient when an exhaust gas passes through the downstream catalyst with a high space velocity. If it is greater than 300 g, the exhaust gas may not reach the first or second layer through diffusion. Furthermore, the pressure loss may become significant. Hydrocarbons desorbed from the upstream catalyst are efficiently trapped by the zeolite of the third layer, when the temperature of the exhaust gas is low. When the temperature increases and then falls within a range, where the NOx reducing material (Cu and/or Co) is activated, NOx is acceleratingly reduced by the hydrocarbons. It becomes possible to more efficiently reduce NOx by the hydrocarbons, if the NOx reducing material is uniformly mixed with the zeolite. Hydrocarbons are modified in the first layer into activated hydrocarbons having a higher activity as a NOx reducing agent, and NOx is efficiently reduced by the activated hydrocarbons in the third layer.

The upstream catalyst and the first catalytic layer of the downstream catalyst according to the first preferred embodiment may assist the third catalytic layer of the downstream catalyst in NOx oxidation, hydrocarbon adsorption, and hydrocarbon modification, when the third catalytic layer deteriorates under a hydrothermal condition. Thus, the catalytic converter according to the first preferred embodiment may suppress catalyst deterioration even under a hydrothermal condition (e.g., exposure to an atmosphere of at least 600°C containing steam).

A downstream catalyst (NOx-adsorbing-and-reducing catalyst) according to a second preferred embodiment will be described in detail in the following. As is seen from Fig. 3, this downstream catalyst 12 comprises a substrate 24 and a catalytic layer 26 formed thereon. This catalytic layer may comprise a NOx reducing component, that is, Pt and/or Rh, for purifying NOx. It is optional to add a NOx adsorbing component (adsorbent) to the catalytic layer in order to improve NOx adsorption efficiency. This NOx adsorbent is selected from K, Na, Cs, Li, Ba, Ca, La, Y, Ce, and mixtures thereof. The NOx reducing component and/or the NOx adsorbing component may optionally be loaded on a refractory inorganic support, in order to improve their functions. This support may be the same as that for supporting thereon the additive of the upstream catalyst. Therefore, the detailed description relating to the refractory inorganic support will not be repeated here.

The following nonlimitative Examples 1-21 are illustrative of the first preferred embodiment.

EXAMPLE 1

(A) Preparation of Upstream Catalyst

An H-type β-zeolite, having a molar ratio of $SiO_2$ to $Al_2O_3$ of about 25, was mixed with an alumina sol and water, and this zeolite in the resultant mixture was ground for 20 min in a magnetic ball mill pot, thereby to obtain a slurry. Then, this slurry was applied to a cordierite monolithic (honeycomb) substrate having a volume of 1.0 liter and about 400 flow paths (cells) per 1 inch$^2$ of section. Then, the coated substrate was dried by hot air at 150°C and then baked at 500°C for 1 hr, thereby to obtain an upstream catalyst having about 150 g of the catalytic coating formed on the substrate, per liter of the substrate.

(B) Preparation of Downstream Catalyst

(1) Formation of 1st Catalytic Layer of Downstream Catalyst

An activated alumina powder was added to a dinitrodiammineplatinum aqueous solution. Then, the obtained mixture was stirred well, then dried for 8 hr at 120°C in a drier, and then baked for 2 hr at 500°C in an air stream, thereby to obtain a platinum-supported activated alumina powder. This catalytic powder contained about 1.0 wt% of platinum. Then, water and an alumina sol acidified with nitric acid were added to the catalytic powder in a magnetic ball mill pot, and then it was driven for about 20 min for mixing and grinding, thereby to obtain a slurry of the Pt-supported activated alumina. This slurry contained 5 wt% of the alumina sol. Then, this slurry was applied to a cordierite monolithic (honeycomb) substrate having a volume of 1.0 liter and about 400 flow paths (cells) per 1 inch$^2$ of section. Then, the coated substrate was dried by hot air at 150°C and then baked at 500°C for 1 hr, thereby to form about 35 g of a coating on the substrate, per liter of the substrate. Then, the coated substrate was dipped in an aqueous solution containing calcium acetate, barium acetate and lanthanum nitrate, then withdrawn therefrom, then dried at 120°C, and then baked at 500°C for 1 hr, thereby to obtain a first catalytic layer containing 0.1 mol of calcium, 0.15 mol of barium and 0.1 mol of lanthanum, formed on the substrate.

(2) Formation of 2nd Catalytic Layer of Downstream Catalyst

An alumina sol and water were added in a magnetic ball mill pot to an active alumina powder containing γ-alumina as a main component, and then it was driven for about 20 min for mixing and grinding, thereby to obtain a slurry. This slurry contained 5 wt% of the alumina sol, based on an oxide ($Al_2O_3$). Then, this slurry was applied to the substrate coated with the first catalytic layer. Then, the coated substrate was dried by hot air at 150°C and then baked at 500°C for 1 hr, thereby to form about 55 g of a second catalytic layer on the first catalytic layer, per liter of the substrate.

(3) Formation of 3rd Catalytic Layer of Downstream Catalyst

An $NH_4$-type MFI zeolite having a molar ratio of $SiO_2$ to $Al_2O_3$ of about 35 was added to a 0.17-M aqueous solution containing therein copper nitrate and cobalt nitrate. This aqueous solution had a molar ratio of Cu to Co of 8.2. The obtained mixture was stirred well, and then a solid phase of the mixture was separated from a liquid phase thereof by filtration. This stirring and the subsequent separation were repeated three times, thereby to obtain a MFI zeolite cake having Cu and Co loaded thereon by ion exchange. Then, this cake was dried at 120°C in a drier for a period of time of not less than 24 hr and then baked in an electric furnace at 600°C for 4 hr under a so-called "ambient condition" having the normal air composition and atmospheric pressure, thereby to obtain a MFI zeolite powder having 3.9 wt% of Cu and 0.8 wt% of Co, which are supported thereon. Then, 2 parts by weight of the obtained MFI zeolite powder and 1 part by weight of an H-type β-zeolite having a molar ratio of $SiO_2$ to $Al_2O_3$ of about 25 were mixed with an alumina sol and water in a magnetic ball mill pot, and then it was driven for 20 min for grinding, thereby to obtain a slurry. This slurry was applied to the coated substrate having the first and second catalytic layers, and then the coated substrate was dried in a drier for 8 hr at 120°C and then baked at 450°C for 1 hr in an air stream, thereby to obtain a downstream catalyst having about 300 g of a third catalytic layer formed on the second catalytic layer, per liter of the substrate.

Then, 1 part by volume of the upstream catalyst and 3 parts by volume of the downstream catalyst were connected together, thereby to obtain a catalytic converter according to the first preferred embodiment.

EXAMPLE 2

A catalytic converter according to the first preferred embodiment was obtained by repeating Example 1 except in that the $NH_4$-type MFI zeolite used in the preparation of the third catalytic layer of the downstream catalyst was replaced with an $NH_4$-type β-zeolite having a molar ratio of $SiO_2$ to $Al_2O_3$ of about 42.

EXAMPLE 3

A catalytic converter according to the first preferred embodiment was obtained by repeating Example 1 except in that the H-type β-zeolite used in the preparation of the upstream catalyst was replaced with an $NH_4$-type Y-type zeolite having a molar ratio of $SiO_2$ to $Al_2O_3$ of about 30.

EXAMPLE 4

A catalytic converter according to the first preferred embodiment was obtained by repeating Example 1 except in that 1.0 wt% of platinum used in the preparation of the first catalytic layer of the downstream catalyst was replaced with a combination of 1.2 wt% of palladium and 0.2 wt% of rhodium.

EXAMPLE 5

A catalytic converter according to the first preferred embodiment was obtained by repeating Example 1 except in that a combination of 0.1 mol of Ca, 0.15 mol of Ba and 0.1 mol of La, used in the preparation of the first catalytic layer of the downstream catalyst, was replaced with a combination of 0.01 mol of Mg, 0.1 mol of Ba and 0.01 mol of K.

EXAMPLE 6

A catalytic converter according to the first preferred embodiment was obtained by repeating Example 1 except in that a combination of 0.1 mol of Ca, 0.15 mol of Ba and 0.1 mol of La, use in the preparation of the first catalytic layer of the downstream catalyst, was replaced with a combination of 0.2 mol of Ba, 0.05 mol of Sr, 0.04 mol of Cs and 0.29 mol of Ce.

EXAMPLE 7

A catalytic converter according to the first preferred embodiment was obtained by repeating Example 1 except in that the $NH_4$-type MFI zeolite powder used in the preparation of the third catalytic layer of the downstream catalyst was replaced with an H-type MFI zeolite having a molar ratio of $SiO_2$ to $Al_2O_3$ of about 24.

EXAMPLE 8

A catalytic converter according to the first preferred embodiment was obtained by repeating Example 1 except

in that the NH$_4$-type MFI zeolite powder used in the preparation of the third catalytic layer of the downstream catalyst was replaced with an H-type MFI zeolite having a molar ratio of SiO$_2$ to Al$_2$O$_3$ of about 76.

EXAMPLE 9

A catalytic converter according to the first preferred embodiment was obtained by repeating Example 1 except in that the activated alumina powder used in the preparation of the second catalytic layer of the downstream catalyst was replaced with a silica powder.

EXAMPLE 10

A catalytic converter according to the first preferred embodiment was obtained by repeating Example 1 except in that the H-type β -zeolite powder used in the preparation of the upstream catalyst was replaced with an H-type MFI zeolite having a molar ratio of SiO$_2$ to Al$_2$O$_3$ of about 35.

EXAMPLE 11

A catalytic converter according to the first preferred embodiment was obtained by repeating Example 1 except in that the H-type β-zeolite powder used in the preparation of the upstream catalyst was replaced with an H-type mordenite having a molar ratio of SiO$_2$ to Al$_2$O$_3$ of about 15.

EXAMPLE 12

A catalytic converter according to the first preferred embodiment was obtained by repeating Example 1 except in that the H-type β-zeolite powder used in the preparation of the upstream catalyst was replaced with a mixture of 1 part by weight of an H-type β -zeolite having a molar ratio of SiO$_2$ to Al$_2$O$_3$ of about 25 and 1 part by weight of an H-type MFI zeolite having a molar ratio of SiO$_2$ to Al$_2$O$_3$ of about 700.

EXAMPLE 13

A catalytic converter according to the first preferred embodiment was obtained by repeating Example 1 except in that the H-type β-zeolite powder used in the preparation of the upstream catalyst was replaced with a mixture of 2 parts by weight of an H-type β-zeolite having a molar ratio of SiO$_2$ to Al$_2$O$_3$ of about 25, 1 part by weight of an H-type MFI zeolite having a molar ratio of SiO$_2$ to Al$_2$O$_3$ of about 700, and 1 part by weight of an H-type Y-type zeolite having a molar ratio of SiO$_2$ to Al$_2$O$_3$ of about 30.

EXAMPLE 14

A catalytic converter according to the first preferred embodiment was obtained by repeating Example 1 except in that the amount of the catalytic coating of the upstream catalyst per liter of the substrate was changed from 150 g to 40 g.

EXAMPLE 15

A catalytic converter according to the first preferred embodiment was obtained by repeating Example 1 except in that the amount of the catalytic coating of the upstream catalyst per liter of the substrate was changed from 150 g to 300 g.

EXAMPLE 16

A catalytic converter according to the first preferred embodiment was obtained by repeating Example 1 except in that 1 part by volume of the upstream catalyst and 1 part by volume of the downstream catalyst were connected together.

EXAMPLE 17

A catalytic converter according to the first preferred embodiment was obtained by repeating Example 1 except in that 1 part by volume of the upstream catalyst and 5 parts by volume of the downstream catalyst were connected together.

EXAMPLE 18

A catalytic converter according to the first preferred embodiment was obtained by repeating Example 1 except in that 5 wt% of copper was loaded on the H-type β-zeolite powder by using a copper phosphate aqueous solution in the preparation of the upstream catalyst, prior to the mix of the H-type β-zeolite powder with the alumina sol and water.

EXAMPLE 19

A catalytic converter according to the first preferred embodiment was obtained by repeating Example 1 except in that 5 wt% of iron was loaded on the H-type β-zeolite powder by using an iron phosphate aqueous solution in the preparation of the upstream catalyst, prior to the mix of the H-type β-zeolite powder with the alumina sol and water.

EXAMPLE 20

A catalytic converter according to the first preferred embodiment was obtained by repeating Example 1 except in that 5 wt% of manganese was loaded on the H-type β-zeolite powder by using a manganese pyrophosphate aqueous solution in the preparation of the upstream catalyst, prior to the mix of the H-type β -zeolite powder with the alumina sol and water.

EXAMPLE 21

A catalytic converter according to the first preferred embodiment was obtained by repeating Example 1 except in that 5 wt% of cobalt was loaded on the H-type β-zeolite powder by using a cobalt phosphate aqueous solution in the preparation of the upstream catalyst, prior to the mix of the H-type β-zeolite powder with the alumina sol and water.

COMPARATIVE EXAMPLE 1

A catalytic converter was obtained by repeating Example 1 except in that the upstream catalyst was omitted.

COMPARATIVE EXAMPLE 2

A catalytic converter was obtained by repeating Example 5 except in that a combination of 0.01 mol of Mg, 0.1 mol of Ba and 0.01 mol of K, used in the preparation of the first catalytic layer of the downstream catalyst, was replaced with a combination of 0.03 mol of Mg, 0.04 mol of Ba and 0.01 mol of K.

COMPARATIVE EXAMPLE 3

A catalytic converter was obtained by repeating Example 6 except in that a combination of 0.2 mol of Ba, 0.05 mol of Sr, 0.04 mol of Cs, and 0.29 mol of Ce, used in the preparation of the first catalytic layer of the downstream catalyst, was replaced with a combination of 0.3 mol of Ba, 0.02 mol of Sr, 0.3 mol of Cs, and 0.01 mol of Ce.

COMPARATIVE EXAMPLE 4

A catalytic converter was obtained by repeating Example 1 except in that the amount of the third catalytic layer of the downstream catalyst was 100 g per liter of the substrate.

COMPARATIVE EXAMPLE 5

A catalytic converter was obtained by repeating Example 1 except in that the amount of the third catalytic layer of the downstream catalyst was 350 g per liter of the substrate.

COMPARATIVE EXAMPLE 6

A catalytic converter was obtained by repeating Example 1 except in that the amount of the catalytic coating of the upstream catalyst was 20 g per liter of the substrate.

COMPARATIVE EXAMPLE 7

A catalytic converter was obtained by repeating Example 1 except in that the amount of the catalytic coating of the upstream catalyst was 350 g per liter of the substrate.

COMPARATIVE EXAMPLE 8

A catalytic converter was obtained by repeating Example 1 except in that an H-type $\beta$-zeolite having a molar ratio of $SiO_2$ to $Al_2O_3$ of about 10 was used in the preparation of the upstream catalyst, in place of that having a molar ratio of $SiO_2$ to $Al_2O_3$ of about 25.

COMPARATIVE EXAMPLE 9

A catalytic converter was obtained by repeating Example 1 except in that an H-type $\beta$-zeolite having a molar ratio of $SiO_2$ to $Al_2O_3$ of about 200 was used in the preparation of the upstream catalyst, in place of that having a molar ratio of $SiO_2$ to $Al_2O_3$ of about 25.

COMPARATIVE EXAMPLE 10

A catalytic converter was obtained by repeating Example 3 except in that an $NH_4$-type Y-type zeolite having a molar ratio of $SiO_2$ to $Al_2O_3$ of about 1.5 was used in the preparation of the upstream catalyst, in place of that having a molar ratio of $SiO_2$ to $Al_2O_3$ of about 30.

COMPARATIVE EXAMPLE 11

A catalytic converter was obtained by repeating Example 10 except in that an H-type MFI zeolite having a molar ratio of $SiO_2$ to $Al_2O_3$ of about 10 was used in the preparation of the upstream catalyst, in place of that having a molar ratio of $SiO_2$ to $Al_2O_3$ of about 35.

COMPARATIVE EXAMPLE 12

A catalytic converter was obtained by repeating Example 11 except in that an H-type mordenite having a molar ratio of $SiO_2$ to $Al_2O_3$ of about 7 was used in the preparation of the upstream catalyst, in place of that having a molar ratio of $SiO_2$ to $Al_2O_3$ of about 15.

COMPARATIVE EXAMPLE 13

A catalytic converter was obtained by repeating Example 1 except in that 2 parts by volume of the upstream catalyst and 1 part by volume of the downstream catalyst were connected together.

COMPARATIVE EXAMPLE 14

A catalytic converter was obtained by repeating Example 1 except in that 1 part by volume of the upstream catalyst and 7 parts by volume of the downstream catalyst were connected together.

COMPARATIVE EXAMPLE 15

A catalytic converter was obtained by repeating Example 1 except in that an $NH_4$-type MFI zeolite having a molar ratio of $SiO_2$ to $Al_2O_3$ of about 17 was used in the preparation of the third catalytic layer of the downstream catalyst, in place of that having a molar ratio of $SiO_2$ to $Al_2O_3$ of about 35.

COMPARATIVE EXAMPLE 16

A catalytic converter was obtained by repeating Example 1 except in that an $NH_4$-type MFI zeolite having a molar ratio of $SiO_2$ to $Al_2O_3$ of about 82 was used in the preparation of the third catalytic layer of the downstream catalyst, in place of that having a molar ratio of $SiO_2$ to $Al_2O_3$ of about 35.

The compositions of the catalytic converters according to Examples 1-21 and Comparative Examples 1-16, which have been described hereinabove, are summarized in Table 1.

Table 1

| | Upstream Catalyst | Downstream Catalyst | | | Vol. Ratio of Upstream Catalyst to Downstream Catalyst |
|---|---|---|---|---|---|
| | | 1st Layer | 2nd Layer | 3rd Layer | |
| Ex. 1 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 2 | 150g/L $NH_4$-type Y-type zeolite ($SiO_2/Al_2O_3$:30) | 1.0wt% $Pt/Al_2O_3$, (0.1mol Ca, 0.15mol Ba & 0.1mol La) | 55g/L $Al_2O_3$ | 3.9wt% Cu & 0.8wt% Co/$NH_4$-type β-zeolite ($SiO_2/Al_2O_3$: 42), 300g/L | 1:3 |
| Ex. 3 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 4 | 150g/L H-type β-zeolite ($SiO_2/Al_2O_3$:25) | 1.2wt% Pt & 0.2wt% $Rh/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :35), 300g/L | 1:3 |
| Ex. 5 | 150g/L H-type β-zeolite ($SiO_2/Al_2O_3$:25) | 1.0wt% $Pt/Al_2O_3$, (0.01mol Mg, 0.1mol Ba & 0.01mol K) | 55g/L $Al_2O_3$ | 3.9wt% Cu & 0.8wt% Co/MFI zeolite ($SiO_2/Al_2O_3$ :35), 300g/L | 1:3 |
| Ex. 6 | 150g/L H-type β -zeolite ($SiO_2/Al_2O_3$:25) | 1.0wt% $Pt/Al_2O_3$, (0.2mol Ba, 0.05mol Sr, 0.04 mol Cs & 0.29mol Ce) | 55g/L $Al_2O_3$ | 3.9wt% Cu & 0.8wt% Co/MFI zeolite ($SiO_2/Al_2O_3$:35), 300g/L | 1:3 |
| Ex. 7 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:24), 300g/L | 1:3 |
| Ex. 8 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:76), 300g/L | 1:3 |

Table continued

| | Upstream Catalyst | Downstream Catalyst | | | Vol. Ratio of Upstream Catalyst to Downstream Catalyst |
| --- | --- | --- | --- | --- | --- |
| | | 1st Layer | 2nd Layer | 3rd Layer | |
| Ex. 9 | 150g/L H-type $\beta$-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 10 | 150g/L H-type MFI-zeolite ($SiO_2/Al_2O_3$:35) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 11 | 150g/L H-type Mordenite ($SiO_2/Al_2O_3$:15) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :35), 300g/L | 1:3 |
| Ex. 12 | 150g/L [H-type $\beta$-zeolite ($SiO_2/Al_2O_3$:25): H-type MFI-zeolite ($SiO_2/Al_2O_3$:700) =1:1] | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 13 | 150g/L [H-type $\beta$-zeolite ($SiO_2/Al_2O_3$:25): H-type MFI-zeolite ($SiO_2/Al_2O_3$:700) :H-type Y-type zeolite =2:1:1) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 14 | 40g/L H-type $\beta$-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :35), 300g/L | 1:3 |
| Ex. 15 | 300g/L H-type $\beta$-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Ex. 16 | 150g/L H-type $\beta$-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:1 |
| Ex. 17 | 150g/L H-type $\beta$ -zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:5 |

Table continued

| | Upstream Catalyst | Downstream Catalyst | | | Vol. Ratio of Upstream Catalyst to Downstream Catalyst |
|---|---|---|---|---|---|
| | | 1st Layer | 2nd Layer | 3rd Layer | |
| Ex. 18 | 150g/L [5wt% Cu/H-type β-zeolite (SiO$_2$/Al$_2$O$_3$:25)] | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Ex. 19 | 150g/L [5wt% Fe/H-type β-zeolite (SiO$_2$/Al$_2$O$_3$:25)] | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Ex. 20 | 150g/L [5wt% Mn/H-type β-zeolite (SiO$_2$/Al$_2$O$_3$:25)] | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Ex. 21 | 150g/L [5wt% Co/H-type β-zeolite (SiO$_2$/Al$_2$O$_3$:25)] | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Com. Ex. 1 | None | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Com. Ex. 2 | 150g/L H-type β-zeolite (SiO$_2$/Al$_2$O$_3$:25) | 1.0wt% Pt/Al$_2$O$_3$, (0.03mol Mg, 0.04mol Ba & 0.01mol K) | 55g/L Al$_2$O$_3$ | 3.9wt% Cu & 0.8wt% Co/MFI zeolite (SiO$_2$/Al$_2$O$_3$ :35), 300g/L | 1:3 |
| Com. Ex. 3 | 150g/L H-type β-zeolite (SiO$_2$/Al$_2$O$_3$:25) | 1.0wt% Pt/Al$_2$O$_3$, (0.3mol Ba, 0.02mol Sr, 0.3 mol Cs & 0.01mol Ce) | 55g/L Al$_2$O$_3$ | 3.9wt% Cu & 0.8wt% Co/MFI zeolite (SiO$_2$/Al$_2$O$_3$ :35), 300g/L | 1:3 |
| Com. Ex. 4 | 150g/L H-type β-zeolite (SiO$_2$/Al$_2$O$_3$:25) | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |
| Com. Ex. 5 | 150g/L H-type β-zeolite (SiO$_2$/Al$_2$O$_3$:25) | 1.0wt% Pt/Al$_2$O$_3$, (0.1mol Ca, 0.15mol Ba & 0.1mol La) | 55g/L Al$_2$O$_3$ | 3.9wt% Cu & 0.8wt% Co/MFI zeolite (SiO$_2$/Al$_2$O$_3$:35), 300g/L | 1:3 |

Table continued

| | Upstream Catalyst | Downstream Catalyst | | | Vol. Ratio of Upstream Catalyst to Downstream Catalyst |
|---|---|---|---|---|---|
| | | 1st Layer | 2nd Layer | 3rd Layer | |
| Com. Ex. 6 | 20g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 7 | 350g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 8 | 150g/L H-type β-zeolite ($SiO_2/Al_2O_3$:10) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 9 | 150g/L H-type β-zeolite ($SiO_2/Al_2O_3$:200) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 10 | 150g/L $NH_4$-type Y-type zeolite ($SiO_2/Al_2O_3$:1.5) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 11 | 150g/L H-type MFI zeolite ($SiO_2/Al_2O_3$:10) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :35), 300g/L | 1:3 |
| Com. Ex. 12 | 150g/L H-type Mordenite ($SiO_2/Al_2O_3$:7) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 1:3 |
| Com. Ex. 13 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:35), 300g/L | 2:1 |
| Com. Ex.14 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :35), 300g/L | 1:7 |

Table continued

| | Upstream Catalyst | Downstream Catalyst | | | Vol. Ratio of Upstream Catalyst to Downstream Catalyst |
| --- | --- | --- | --- | --- | --- |
| | | 1st Layer | 2nd Layer | 3rd Layer | |
| Com. Ex. 15 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$ :17), 300g/L | 1:3 |
| Com. Ex. 16 | 150g/L H-type β-zeolite ($SiO_2/Al_2O_3$:25) | 1.0wt% $Pt/Al_2O_3$, (0.1mol Ca, 0.15mol Ba & 0.1mol La) | 55g/L $Al_2O_3$ | 3.9wt% Cu & 0.8wt% Co/MFI zeolite ($SiO_2/Al_2O_3$:82), 300g/L | 1:3 |

FIRST CATALYTIC ACTIVITY EVALUATION TEST

Each of the catalytic converters according to Examples 1-21 and Comparative Examples 1-16 was subjected to the following first catalytic-activity evaluation test.

In this test, each catalytic converter was arranged in the exhaust passage of an engine dynamometer having a 4-cylindered 2.5 liter diesel engine installed therein. Then, the engine was driven such that the exhaust gas of 630°C was allowed to pass through each catalytic converter for 30 hr. Then, the NOx concentration of the exhaust gas was measured at the inlet and the outlet of each catalytic converter at the same time with a NOx monitor, while the temperature of the inlet of each catalytic converter was increased from 100°C to 500°C at a rate of about 30°C per minute. During this measurement, the average molar ratio of hydrocarbons to NOx of the exhaust gas was adjusted to about 2.8 by injecting a light oil from a nozzle arranged between the exhaust manifold and the upstream catalyst, and the gas space velocity in relation to the downstream catalytic converter was adjusted to 45,000 $h^{-1}$. The NOx conversion of each catalytic converter was determined by the following expression:

$$\text{NOx Conversion (\%)} = [(a-b)/a] \times 100$$

where "a" is the NOx concentration at the inlet of the catalytic converter (i.e., the inlet of the upstream catalyst), and "b" is the NOx concentration at the outlet of the catalytic converter (i.e., the outlet of the downstream catalyst). The results of the determination of the average NOx conversion are shown in Table 2.

Table 2

| | Average NOx Conversion (%) |
| --- | --- |
| Example 1 | 26.9 |
| Example 2 | 27.8 |
| Example 3 | 25.3 |
| Example 4 | 26.8 |
| Example 5 | 26.2 |
| Example 6 | 25.9 |
| Example 7 | 27.6 |
| Example 8 | 25.8 |
| Example 9 | 25.3 |
| Example 10 | 24.3 |

Table continued

| | Average NOx Conversion (%) |
|---|---|
| Example 11 | 23.8 |
| Example 12 | 27.7 |
| Example 13 | 27.6 |
| Example 14 | 21.6 |
| Example 15 | 24.3 |
| Example 16 | 21.3 |
| Example 17 | 25.9 |
| Example 18 | 32.1 |
| Example 19 | 30.3 |
| Example 20 | 31.4 |
| Example 21 | 33.2 |
| Com. Ex. 1 | 13.3 |
| Com. Ex. 2 | 17.6 |
| Com. Ex. 3 | 16.9 |
| Com. Ex. 4 | 10.1 |
| Com. Ex. 5 | 16.0 |
| Com. Ex. 6 | 13.5 |
| Com. Ex. 7 | 15.0 |
| Com. Ex. 8 | 16.2 |
| Com. Ex. 9 | 17.0 |
| Com. Ex. 10 | 10.8 |
| Com. Ex. 11 | 13.6 |
| Com. Ex. 12 | 12.4 |
| Com. Ex. 13 | 9.7 |
| Com. Ex. 14 | 14.2 |
| Com. Ex. 15 | 8.2 |
| Com. Ex. 16 | 13.4 |

The following nonlimitative Examples 22-26 are illustrative of the second preferred embodiment.

EXAMPLE 22

(1) Preparation of Upstream Catalyst

A boehmite having a specific surface area of about 280 m$^2$/g was added to a copper phosphate aqueous solution basified with ammonia. After that, the resultant mixture was stirred well, then dried at 120°C for a period of time of at least 24 hr, and then baked at 500°C for 2 hr, thereby to obtain a copper-phosphate-carried alumina powder. Then, 1 part by weight of this alumina powder was mixed with 1 part by weight of an H-type MFI zeolite powder having a molar ratio of silica to alumina of about 100. Then, the obtained mixture was mixed with an alumina sol and water in a magnetic ball mill pot, and it was driven for about 30 min for mixing and grinding, thereby to obtain a slurry. The amount of the alumina sol on an oxide basis (Al$_2$O$_3$) was 10 wt%, based on the total weight of the alumina powder and the H-type MFI zeolite. Then, this slurry was applied to a cordierite monolithic (honeycomb) substrate having a volume of 0.8 liter and about 600 flow paths (cells) per 1 inch$^2$ of section. Then, the coated substrate was dried by hot air at 150°C and then

16

baked at 500°C for 1 hr, thereby to form about 120 g of a first catalytic layer on the substrate, per liter of the substrate.

Separately, a 0.2-M copper nitrate aqueous solution was adjusted to have a pH of 9.5 by adding an aqueous ammonia thereto. Into this solution an $NH_4$-type MFI zeolite powder having a molar ratio of $SiO_2$ to $Al_2O_3$ of about 45 was added. The obtained mixture was stirred well, and then a solid phase of the mixture was separated from a liquid phase thereof by filtration. This stirring and the subsequent separation were repeated three times, thereby to obtain a MFI zeolite cake having Cu loaded thereon by ion exchange. Then, this cake was dried at 120°C in a drier for a period of time of not less than 24 hr and then baked in an electric furnace at 600°C for 4 hr under the ambient condition, thereby to obtain a MFI zeolite powder having 3.6 wt% of Cu supported thereon. The obtained MFI zeolite powder was mixed with an alumina sol and water in a magnetic ball mill pot, and then it was driven for 20 min for mixing and grinding, thereby to obtain a slurry. The amount of this alumina sol on an oxide basis ($Al_2O_3$) was 10 wt%, based on the total weight of the MFI zeolite powder. The slurry was applied to the coated substrate having the first catalytic layer, and then the coated substrate was dried at 150°C by hot air and then baked at 500°C for 1 hr, thereby to obtain an upstream catalyst having about 100 g of a second catalytic layer formed on the first catalytic layer, per liter of the substrate.

(2) Preparation of Downstream Catalyst

A boehmite having a specific surface area of about 280 $m^2$/g was added to a lanthanum nitrate aqueous solution such that the molar ratio of lanthanum to aluminum of the resultant mixture was 3:97. This mixture was stirred well, then dried at 120°C for a period of time of at least 24 hr, and then baked at 500°C for 4 hr, thereby to obtain an alumina powder having lanthanum loaded thereon. This alumina powder was added to a dinitrodiammineplatinum aqueous solution containing about 4 wt% of Pt. The resultant mixture was stirred well, then dried at 120°C for a period of time of at least 24 hr, and then baked at 650°C for 4 hr, thereby to obtain an alumina powder having lanthanum and 2wt% of Pt, which are loaded thereon. Then, this alumina powder was mixed with water and an alumina sol acidified with nitric acid in a magnetic ball mill pot, and it was driven for 30 min for grinding, thereby to obtain a slurry. The amount of this alumina sol was 2 wt%, based on the total weight of the La-and-Pt-carried alumina powder. The slurry was applied to a cordierite monolithic (honeycomb) substrate having a volume of 1.2 liter and about 400 flow paths (cells) per 1 inch$^2$ of section. Then, the coated substrate was dried by hot air at 150°C and then baked at 500°C for 1 hr, thereby to obtain an downstream catalyst having about 160 g of the catalytic coating formed on the substrate, per liter of the substrate.

(3) Preparation of Catalytic Converter

A catalytic converter, having a total catalyst volume of 2.0 liter, was prepared by connecting the upstream and downstream catalysts together in-line.

EXAMPLE 23

(1) Preparation of Upstream Catalyst

An upstream catalyst was prepared in the same manner as that of Example 22 except in that the copper phosphate was replaced with zinc phosphate, that the H-type MFI zeolite having a molar ratio of $SiO_2$ to $Al_2O_3$ of about 100 was replaced with a mixture of 2 parts by weight of an H-type mordenite having a molar ratio of $SiO_2$ to $Al_2O_3$ of about 40 and 1 part by weight of a Y-type zeolite having a molar ratio of $SiO_2$ to $Al_2O_3$ of about 40, and that the copper nitrate aqueous solution was replaced with an aqueous solution containing silver nitrate and cobalt nitrate. This aqueous solution was the same as that of the copper nitrate aqueous solution in concentration. The obtained MFI zeolite contained 3.2 wt% of Ag and 0.3 wt% of Co, which were loaded thereon.

(2) Preparation of Downstream Catalyst

A downstream catalyst was prepared in the same manner as that of Example 22 except in that the lanthanum was replaced with a mixture of 0.5 parts by mol of calcium, 2 parts by mol of sodium and 1 part by mol of cerium, and that the boehmite was replaced with a titanium-silica mixture having a specific surface area of about 90 $m^2$/g.

(3) Preparation of Catalytic Converter

A catalytic converter was prepared in the same manner as that of Example 22.

EXAMPLE 24

(1) Preparation of Upstream Catalyst

An upstream catalyst was prepared in the same manner as that of Example 22 except in that the copper phosphate was replaced with a mixture of 4 parts by weight of nickel phosphate, 1 part by weight of tin phosphate and 1 part by weight of molybdenum phosphate, that the H-type MFI zeolite powder having a molar ratio of $SiO_2$ to $Al_2O_3$ of about 100 was replaced with an H-type β-zeolite powder having a molar ratio of $SiO_2$ to $Al_2O_3$ of about 150, and that the copper nitrate aqueous solution was replaced with an aqueous solution containing cobalt nitrate, indium nitrate and iridium nitrate. This aqueous solution was the same as that of the copper nitrate aqueous solution in concentration. The obtained MFI zeolite contained 2.0 wt% of cobalt, 0.5 wt% of indium and 0.8 wt% of iridium, which were loaded thereon.

(2) Preparation of Downstream Catalyst

A downstream catalyst was prepared in the same manner as that of Example 22 except in that the lanthanum was replaced with a mixture of 0.1 parts by mol of potassium, 0.2 parts by mol of barium and 3 parts by mol of lanthanum, and that the boehmite was replaced with an alumina-zirconia-magnesia mixture having a specific surface area of about 240 m$^2$/g. In fact, this mixture contained 95 parts by mol of Al, 3 parts by mol of Zr and 2 parts by mol of Mg.

(3) Preparation of Catalytic Converter

A catalytic converter was prepared in the same manner as that of Example 22.

EXAMPLE 25

(1) Preparation of Upstream Catalyst

An upstream catalyst was prepared in the same manner as that of Example 22 except in that the copper phosphate was replaced with a mixture of 3 parts by weight of tungsten phosphate, 1 part by weight of manganese phosphate and 1 part by weight of cobalt phosphate, and that the copper nitrate aqueous solution was replaced with an aqueous solution containing iridium nitrate and rhodium nitrate. This aqueous solution was the same as that of the copper nitrate aqueous solution in concentration. The obtained MFI zeolite contained 0.5 wt% of iridium and 0.8 wt% of rhodium, which were loaded thereon.

(2) Preparation of Downstream Catalyst

A downstream catalyst was prepared in the same manner as that of Example 22 except in that the lanthanum was replaced with a mixture of 0.1 parts by mol of cesium, 0.1 parts by mol of lithium and 3 parts by mol of lanthanum, and that the boehmite was replaced with an alumina-zirconia mixture having a specific surface area of about 270 m$^2$/g. In fact, this mixture contained 97 parts by mol of Al and 3 parts by mol of Zr.

(3) Preparation of Catalytic Converter

A catalytic converter was prepared in the same manner as that of Example 22.

EXAMPLE 26

(1) Preparation of Upstream Catalyst

A zeolite powder mixture was prepared by mixing 3 parts by weight of an H-type MFI zeolite powder having a molar ratio of silica to alumina of about 80 with 5 parts by weight of an H-type β-zeolite having a molar ratio of silica to alumina of about 50. The zeolite powder mixture was mixed with an alumina sol and water in a magnetic ball mill pot, and it was driven for about 60 min for mixing and grinding, thereby to obtain a slurry. The amount of the alumina sol on an oxide basis ($Al_2O_3$) was 10 wt%, based on the total weight of the zeolite powder mixture. Then, this slurry was applied to a cordierite monolithic (honeycomb) substrate having a volume of 0.8 liter and about 600 flow paths (cells) per 1 inch$^2$ of section. Then, the coated substrate was dried by hot air at 150°C and then baked at 500°C for 1 hr, thereby to obtain an upstream catalyst having about 180 g of a catalytic layer on the substrate, per liter of the substrate.

(2) Preparation of Downstream Catalyst

A downstream catalyst having a volume of 1.2 liter was prepared in the same manner as that of Example 22.

(3) Preparation of Catalytic Converter

Then, a catalytic converter, having a total catalyst volume of 2.0 liter, was prepared by connecting the upstream and downstream catalysts together in-line.

COMPARATIVE EXAMPLE 17

A catalytic converter was prepared in the same manner as that of Example 22 except in that the volume of the upstream catalyst was 2.0 liter in place of 0.8 liter and that the downstream catalyst was omitted.

COMPARATIVE EXAMPLE 18

A catalytic converter was prepared in the same manner as that of Example 22 except in that the volume of the downstream catalyst was 2.0 liter in place of 1.2 liter and that the upstream catalyst was omitted.

COMPARATIVE EXAMPLE 19

A catalytic converter was prepared in the same manner as that of Example 22 except in that the relative positions of the upstream and downstream catalysts were reversed. In other words, a catalytic converter was prepared by arranging the downstream catalyst of Example 22 upstream of the upstream catalyst of Example 22.

The compositions of the catalytic converters according to Examples 22-26 and Comparative Examples 17-19, which have been described hereinabove, are summarized in Table 3.

Table 3

| | Upstream Catalyst | | | Downstream Catalyst | |
|---|---|---|---|---|---|
| | Vol. (liter) | 1st Layer Composition | 2nd Layer Composition | Vol. (liter) | Composition |
| Ex. 22 | 0.8 | 120g/L (Copper Phosphate/$Al_2O_3$ & H-type MFI Zeolite) | 100g/L (3.6wt% Cu/MFI Zeolite) | 1.2 | 160g/L [2wt% Pt/(La & $Al_2O_3$ (3:97 by mol))] |
| Ex. 23 | 0.8 | 120g/L (Zinc Phosphate/$Al_2O_3$ & H-Mordenite:H-Y-type Zeolite = 2:1 by wt.) | 100g/L [(3.2wt% Ag & 0.3wt% Co)/MFI Zeolite] | 1.2 | 160g/L [2wt% Pt/(0.5mol Ca, 2mol Na, 1mol Ce, $TiO_2$ & $SiO_2$)] |
| Ex. 24 | 0.8 | 120g/L [(Nickel Phosphate, Tin Phosphate & Molybdenum Phosphate (4:1:1 by wt.))/$Al_2O_3$ & H-type β - Zeolite] | 100g/L [(2.0wt% Co, 0.5wt% In & 0.8wt% Ir)/MFI Zeolite] | 1.2 | 160g/L [2wt% Pt/(K, Ba & La (0.1:0.2:3 by mol) & $Al_2O_3$, $ZrO_2$ & MgO (95:3:2 by mol))] |
| Ex. 25 | 0.8 | 120g/L [(Tungsten Phosphate, Manganese Phosphate & Cobalt Phosphate (3:1:1 by wt.))/$Al_2O_3$ & H-type MFI Zeolite] | 100g/L [(0.5wt% Ir & 0.8wt% Rh)/MFI Zeolite] | 1.2 | 160g/L [2wt% Pt/(Cs, Li & La (0.1:0.1:3 by mol) & $Al_2O_3$ & $ZrO_2$ (97:3 by mol))] |
| Ex. 26 | 0.8 | H-type MFI Zeolite & H-type β -zeolite (3:5 by wt.), 180g/L | | 1.2 | 160g/L [2wt% Pt/(La & $Al_2O_3$ (3:97 by mol))] |

Table continued

| | Upstream Catalyst | | | Downstream Catalyst | |
|---|---|---|---|---|---|
| | Vol. (liter) | 1st Layer Composition | 2nd Layer Composition | Vol. (liter) | Composition |
| Com. Ex. 17 | 2.0 | 120g/L (Copper Phosphate/$Al_2O_3$ & H-type MFI Zeolite) | 100g/L (3.6wt% Cu/MFI Zeolite) | - | - |
| Com. Ex. 18 | - | - | - | 2.0 | 160g/L [2wt% Pt/(La & $Al_2O_3$ (3:97 by mol))] |
| Com. Ex. 19 | 1.2 | 160g/L [2wt% Pt/(La & $Al_2O_3$ (3:97 by mol))] | | 0.8 | 1st Layer: 120 g/L (Copper Phosphate/$Al_2O_3$ & H-type MFI Zeolite) 2nd Layer: 100g/L (3.6wt% Cu/MFI Zeolite) |

SECOND CATALYTIC ACTIVITY EVALUATION TEST

Each of the catalytic converters according to Examples 22-26 and Comparative Examples 17-19 was subjected to the following second catalytic-activity evaluation test.

In this test, each catalytic converter was arranged in the exhaust passage of an engine dynamometer having a 4-cylindered 2.5 liter direct-injection diesel engine installed therein. Then, the engine was driven such that the exhaust gas of 600°C was allowed to pass through each catalytic converter for 100 hr in order to conduct a pretreatment of the catalytic converter. Then, the NOx concentration of the exhaust gas was measured at the inlet and the outlet of each catalytic converter with a NOx monitor, while the temperature of the inlet of each catalytic converter was maintained at 150°C for 5 min, then increased to 450°C by spending about 3 min, and then maintained at 450°C for 5 min. In fact, the temperature of the inlet of each catalytic converter was regulated as above by adjusting the engine load. During the measurement of the NOx concentration, the gas space velocity was adjusted to about 35,000 h$^{-1}$, and the average molar ratio of hydrocarbons to NOx of the exhaust gas was about 4. In fact, the molar ratio of hydrocarbons to NOx of the exhaust gas during the temperature increase to 450°C was about 1.2. The NOx conversion of each catalytic converter during the temperature increase was determined in the same manner as in the first catalytic-activity evaluation test, and the results are shown in Table 4. Furthermore, the $N_2O$ concentration of the exhaust gas was measured with an $N_2O$ monitor at a position downstream of each catalytic converter. The results of the maximum $N_2O$ concentration are also shown in Table 4.

Table 4

| | NOx Conversion (%) | Maximum $N_2O$ Concentration (ppm) |
|---|---|---|
| Example 22 | 45.3 | 2.2 |
| Example 23 | 44.1 | 1.8 |
| Example 24 | 44.2 | 2.3 |
| Example 25 | 44.8 | 1.7 |
| Example 26 | 40.2 | 1.7 |
| Com. Ex. 17 | 24.9 | 1.3 |
| Com. Ex. 18 | 22.6 | 18 |
| Com. Ex. 19 | 25.5 | 20 |

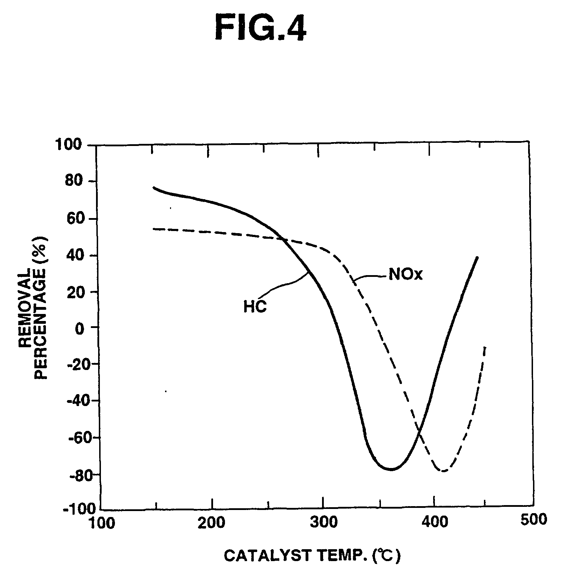

Fig. 4 shows the variation of the percentage of the removal of hydrocarbons and NOx from the exhaust gas with the catalyst temperature of the catalytic converter according to Example 26. In fact, the solid line of Fig. 4 shows the variation of the percentage of the removal of hydrocarbons from the exhaust gas with the temperature of the upstream catalyst of Example 26, and the dotted line of Fig. 4 shows that of NOx from the exhaust gas with the temperature of the downstream catalyst of Example 26. The removal of hydrocarbons and NOx from the exhaust gas means the adsorption of these gas components on the upstream and downstream catalysts and the chemical changes of these gas components into other gas components (e.g., $H_2O$, $CO_2$ and $N_2$). As shown by the solid line of Fig. 4, the removal percentage of hydrocarbons is relatively high, that is, a relatively large amount of hydrocarbons is removed from the exhaust gas by adsorption on the upstream catalyst, until the temperature of the upstream catalyst increases to about 250°C. As the temperature of the upstream catalyst farther increases from about 250°C over about 300°C towards about 350°C, the removal percentage of hydrocarbons from the exhaust gas decreases sharply. This means that the amount of hydrocarbons in the exhaust gas increases sharply due to desorption of hydrocarbons from the upstream catalyst. As the temperature of the upstream catalyst farther increases over about 350°C, the removal percentage of hydrocarbons from the exhaust gas increases sharply, due to the combustion (decomposition) of hydrocarbons. On the other hand, as shown by the dotted line of Fig. 4, the removal percentage of NOx is relatively high due to adsorption on the downstream catalyst, until the temperature of the downstream catalyst increases to about 300°C. As the temperature of the downstream catalyst farther increases over about 300°C, the removal percentage of NOx from the exhaust gas decreases. This means that the amount of NOx in the exhaust gas increases due to desorption of NOx from the downstream catalyst. The amount of the NOx desorption becomes maximum when the temperature of the downstream catalyst is about 400°C. It is understood from Fig. 4 that the desorption of hydrocarbons from the upstream catalyst occurs at a temperature lower than the temperature at which the desorption of NOx from the downstream catalyst occurs. In other words, as the catalyst temperature of the catalytic converter increases after the engine has started, the desorption of hydrocarbons from the upstream catalyst occurs prior to the desorption of NOx from the downstream catalyst. Thus, the desorbed hydrocarbons can be brought into contact with the adsorbed NOx. With this, the desorbed hydrocarbons may react selectively with the NOx, thereby to reduce the NOx into $N_2$.

Although the invention has been described above by reference to certain embodiments, the invention is not limited to the embodiments described above. Modifications and variations of the embodiments described above will occur to those skilled in the art, in light of the above teachings. For example, a combination of the upstream and downstream catalysts can be formed into one-piece construction by forming catalytic coatings of the upstream and downstream catalysts on upstream and downstream portions of a single monolithic (honeycomb) substrate, respectively. The scope of the invention is defined with reference to the following claims.

**Claims**

1. A method of purifying an exhaust gas, using a device (10) comprising:

   a NOx-adsorbing-and-reducing catalyst (12) that is capable of adsorbing a NOx and accelerating a reduction of said adsorbed NOx into $N_2$, within a $NO_2$-forming temperature range where a reaction represented by the following formula (1) proceeds,

   $$2NO+O_2 \rightarrow 2NO_2 \qquad (1)$$

   said device (10) further comprising a hydrocarbon-adsorbing-and-desorbing material (14) arranged upstream of said NOx-adsorbing-and-reducing catalyst (12);
   wherein, within said $NO_2$-forming temperature range, the concentration of hydrocarbons of the exhaust gas is varied at an inlet of said NOx-adsorbing-and-reducing catalyst (12), such that said adsorbed NOx is selectively reduced by said hydrocarbons into $N_2$.

2. A method according to claim 1, wherein said hydrocarbon-adsorbing-and-desorbing material (14) adsorbs hydrocarbons at a first temperature that is lower than a value T°C that is within said $NO_2$-forming temperature range and desorbs said hydrocarbons at a second temperature that is not lower than said value T°C, and wherein said NOx-adsorbing-and-reducing catalyst (12) adsorbs said NOx within said $NO_2$-forming temperature range and is capable of accelerating said reduction of said NOx at said second temperature.

3. A method according to claim 2, wherein said value T°C is lower than 300°C.

4. A method according to any preceding claim, wherein the hydrocarbon-adsorbing-and-desorbing material (14) includes a phosphate.

5. A method according to any preceding claim, wherein said hydrocarbon-adsorbing-and-desorbing material (14) comprises at least one zeolite selected from MFI zeolite, Y-type zeolite, mordenite, and β-zeolite.

6.  A method according to claim 5, wherein said β-zeolite has a molar ratio of silica to alumina of from 20 to 150, said Y-type zeolite has a molar ratio of silica to alumina of from 4 to 50, said MFI zeolite has a molar ratio of silica to alumina of from 20 to 1,000, and said mordenite has a molar ratio of silica to alumina of from 9 to 25.

7.  A method according to claim 5, wherein said at least one zeolite of said hydrocarbon-adsorbing-and-desorbing material (14) is in an amount of 30-300 g per liter of said hydrocarbon-adsorbing-and-desorbing material (14) and supports thereon at least one metal selected from copper, cobalt, iron, manganese, silver, indium, iridium, and rhodium.

8.  A method according to any preceding claim, wherein said NOx-adsorbing-and-reducing catalyst (12) comprises: (i) a first catalytic layer (18) containing at least one first component selected from platinum, palladium, and rhodium and at least one second component selected from alkali metals, alkali earth metals, and rare earth elements; (ii) a second catalytic layer (20) formed on said first catalytic layer (18) and containing alumina and/or silica; and (iii) a third catalytic layer (22) formed on said second catalytic layer (20) and containing a zeolite having copper and/or cobalt.

9.  A method according to claim 8, wherein said copper and/or cobalt of said third catalytic layer (22) is in an amount of 0.05-0.5 moles per liter of said NOx-adsorbing-and-reducing catalyst (12).

10. A method according to claim 8, wherein said at least one second component of said first catalytic layer (18) is in an amount that is greater than 0.10 mol and up to 0.60 mol per liter of said NOx-adsorbing-and-reducing catalyst (12) and is selected from magnesium, calcium, sodium, potassium, barium, lanthanum, strontium, cesium, cerium, lithium, and yttrium.

11. A method according to any preceding claim, wherein the volume ratio of said hydrocarbon-adsorbing-and-desorbing material (14) to said NOx-adsorbing-and-reducing catalyst (12) is from 1:6 to 1:1.

12. A method according to any preceding claim, wherein said exhaust gas is exhausted from an engine driven with an air-fuel ratio of at least 14.7, said exhaust gas having an oxygen concentration of at least 5% and a molar ratio of hydrocarbons to NOx of up to 10.


**Patentansprüche**

1.  Verfahren zum Reinigen eines Abgases unter Verwendung einer Vorrichtung (10) umfassend:

    ein NOx-adsorbierenden und -reduzierenden Katalysator (12), der in der Lage ist, ein NOx zu adsorbieren und die Reduktion des adsorbierten NOx zu $N_2$ innerhalb eines Temperaturbereichs der $NO_2$-Erzeugung zu beschleunigen, in welchem Temperaturbereich eine durch die folgende Gleichung (1) dargestellte Reaktion abläuft:

    $$2NO + O_2 \rightarrow 2NO_2 \qquad (1)$$

    wobei die Vorrichtung (10) ferner ein Kohlenwasserstoff adsorbierendes und desorbierendes Material (14) aufweist, das eintrittseitig zu dem NOx-adsorbierenden und -reduzierenden Katalysator (12) angeordnet ist;
    wobei innerhalb dieses Temperaturbereichs der $NO_2$-Erzeugung die Konzentration der Kohlenwasserstoffe des Abgases an einem Einlass des NOx-adsorbierenden und - reduzierenden Katalysators (12) derart variiert wird, dass das adsorbierte NOx selektiv von den Kohlenwasserstoffen zu $N_2$ reduziert wird.

2.  Verfahren nach Anspruch 1, bei welchem das Kohlenwasserstoff adsorbierende und desorbierende Material (14) Kohlenwasserstoffe bei einer ersten Temperatur adsorbiert, die kleiner ist als ein Wert T in °C, der innerhalb des Temperaturbereichs der $NO_2$-Erzeugung liegt, und die Kohlenwasserstoffe bei einer zweiten Temperatur desorbiert, die nicht kleiner ist als der Wert T in °C, und wobei der NOx-adsorbierende und -reduzierende Katalysator (12) das NOx innerhalb des Temperaturbereichs der $NO_2$ Erzeugung adsorbiert und in der Lage ist, die Reduktion des NOx bei der zweiten Temperatur zu beschleunigen.

3.  Verfahren nach Anspruch 2, bei welchem der Wert T in °C kleiner ist als 300°C.

**4.** Verfahren nach einem der vorgenannten Ansprüche, bei welchem das Kohlenwasserstoff adsorbierende und desorbierende Material (14) ein Phosphat einschließt.

**5.** Verfahren nach einem der vorgenannten Ansprüche, bei welchem das Kohlenwasserstoff adsorbierende und desorbierende Material (14) mindestens ein Zeolith aufweist, der ausgewählt ist aus MFI-Zeolith, Zeolith vom $\gamma$-Typ, Mordenit und $\beta$-Zeolith.

**6.** Verfahren nach Anspruch 5, bei welchem der $\beta$-Zeolith ein Molverhältnis von Siliciumdioxid zu Aluminiumoxid von 20 bis 150 hat und wobei der Zeolith vom $\gamma$-Typ ein Molverhältnis von Siliciumdioxid zu Aluminiumoxid von 4 bis 50 hat und wobei der MFI-Zeolith ein Molverhältnis von Siliciumdioxid zu Aluminiumoxid von 20 bis 1.000 hat und der Mordenit ein Molverhältnis von Siliciumdioxid zu Aluminiumoxid von 9 bis 25 hat.

**7.** Verfahren nach Anspruch 5, bei welchem mindestens ein Zeolith des Kohlenwasserstoff adsorbierenden und desorbierenden Materials (14) in einer Menge von 30 bis 300 g/l des Kohlenstoff adsorbierenden und desorbierenden Materials (14) vorliegt und darauf mindestens ein Metall trägt, das ausgewählt ist aus Kupfer, Cobalt, Eisen, Mangan, Silber, Indium, Iridium und Rhodium.

**8.** Verfahren nach einem der vorgenannten Ansprüche, bei welchem der NOx-adsorbierende und -reduzierende Katalysator (12) aufweist: (i) eine erste katalytische Lage (18), die mindestens eine erste Komponente enthält, welche ausgewählt ist aus Platin, Palladium und Rhodium, und mindestens eine zweite Komponente, die ausgewählt ist aus Alkalimetallen, Erdalkalimetallen und Seltenerdmetallen; (ii) eine zweite katalytische Lage (20), die auf der ersten katalytischen Lage (18) erzeugt ist und Aluminiumoxid und/oder Siliciumdioxid enthält; sowie (iii) eine dritte katalytische Lage (22), die auf der zweiten katalytischen Lage (20) erzeugt ist und einen Zeolith enthält, der Kupfer und/oder Cobalt aufweist.

**9.** Verfahren nach Anspruch 8, bei welchem das Kupfer und/oder Cobalt der dritten katalytischen Lage (22) in einer Menge von 0,05 bis 0,5 Mol/l des NOx-adsorbierenden und -reduzierenden Katalysators (12) vorliegt.

**10.** Verfahren nach Anspruch 8, bei welchem die mindestens zweite Komponente der ersten katalytischen Lage (18) in einer Menge vorliegt, die größer ist als 0,10 Mol und bis zu 0,60 Mol/l des NOx-adsorbierenden und -reduzierenden Katalysators (12) beträgt und ausgewählt ist aus: Magnesium, Calcium, Natrium, Kalium, Barium, Lanthan, Strontium, Cäsium, Cer, Lithium und Yttrium.

**11.** Verfahren nach einem der vorgenannten Ansprüche, bei welchem das Volumenverhältnis des Kohlenwasserstoff adsorbierenden und desorbierenden Materials (14) zu dem NO-adsorbierenden und -reduzierenden Katalysator (12) 1:6 bis 1:1 beträgt.

**12.** Verfahren nach einem der vorgenannten Ansprüche, bei welchem das Abgas von einem mit einem Luft/Kraftstoff-Verhältnis von mindestens 14,7 angetriebenen Motors abgegeben wird, wobei das Abgas eine Sauerstoffkonzentration von mindestens 5% und ein Molverhältnis von Kohlenwasserstoffen zu NOx von bis zu 10 hat.

**Revendications**

**1.** Procédé de purification d'un gaz d'échappement en utilisant un dispositif (10) comprenant:

un catalyseur adsorbant et réduisant le NOx (12) qui est capable d'adsorber du NOx et d'accélérer la réduction dudit NOx adsorbé en $N_2$, dans une gamme de température de formation de $NO_2$ où procède une réaction représentée par la formule suivante (1),

$$2NO+O_2 \rightarrow 2NO_2 \qquad (1)$$

ledit dispositif (10) comprenant en outre un matériau adsorbant et désorbant l'hydrocarbure (14) disposé en amont dudit catalyseur adsorbant et réduisant le NOx (12);
dans lequel, à l'intérieur de ladite gamme de température de formation de $NO_2$, la concentration en hydrocarbures du gaz d'échappement est modulée à une entrée dudit catalyseur adsorbant et réduisant le NOx (12), de sorte que ledit NOx adsorbé est réduit sélectivement par lesdits hydrocarbures en $N_2$.

**2.** Procédé selon la revendication 1, dans lequel ledit matériau adsorbant et désorbant l'hydrocarbure (14) adsorbe les hydrocarbures à une première température qui est plus basse qu'une valeur T°C qui est à l'intérieur de ladite gamme de température de formation de $NO_2$ et désorbe lesdits hydrocarbures à une seconde température qui n'est pas plus basse que ladite valeur T°C et dans lequel ledit catalyseur adsorbant et réduisant le NOx (12) adsorbe ledit NOx à l'intérieur de ladite gamme de température de formation de $NO_2$ et est capable d'accélérer ladite réduction dudit NOx à ladite seconde température.

**3.** Procédé selon la revendication 2, dans lequel ladite valeur T°C est plus basse que 300°C.

**4.** Procédé selon l'une quelconque des revendications précédentes, dans lequel le matériau adsorbant et désorbant l'hydrocarbure (14) comprend un phosphate.

**5.** Procédé selon l'une quelconque des revendications précédentes, dans lequel le matériau adsorbant et désorbant l'hydrocarbure (14) comprend au moins une zéolithe choisie parmi une zéolithe MFI, une zéolithe de type γ, une mordénite, et une zéolithe β.

**6.** Procédé selon la revendication 5 dans lequel ladite zéolithe β a un rapport molaire silice sur alumine variant de 20 à 150, ladite zéolithe de type γ a un rapport molaire silice sur alumine variant de 4 à 50, ladite zéolithe MFI a un rapport molaire silice sur alumine variant de 20 à 1 000, et ladite mordénite a un rapport molaire silice sur alumine variant de 9 à 25.

**7.** Procédé selon la revendication 5, dans lequel au moins une zéolithe dudit matériau adsorbant et désorbant l'hydrocarbure (14) est en quantité variant de 30 à 300 g par litre dudit matériau adsorbant et désorbant l'hydrocarbure (14) et y supporte au moins un métal choisi parmi le cuivre, le cobalt, le fer, le manganèse, l'argent, l'indium, l'iridium et le rhodium.

**8.** Procédé selon l'une quelconque des revendications précédentes, dans lequel ledit catalyseur adsorbant et réduisant le NOx (12) comprend: (i) une première couche catalytique (18) contenant au moins un premier composant choisi parmi le platine, le palladium ainsi que le rhodium et au moins un second composant choisi parmi les métaux alcalins, les métaux alcalino-terreux et les terres rares; (ii) une seconde couche catalytique (20) formée sur ladite première couche catalytique (18) et contenant de l'alumine et/ou de la silice; et (iii) une troisième couche catalytique (22) formée sur ladite seconde couche catalytique (20) et contenant une zéolithe ayant du cuivre et/ou du cobalt.

**9.** Procédé selon la revendication 8, dans lequel ledit cuivre et/ou cobalt de ladite troisième couche catalytique (22) est en quantité de 0,05 à 0,5 moles par litre dudit catalyseur adsorbant et réduisant le NOx (12).

**10.** Procédé selon la revendication 8, dans lequel le au moins un second composant de ladite première couche catalytique (18) est en quantité qui est supérieure à 0,10 mole et allant jusqu'à 0,60 mole par litre dudit catalyseur adsorbant et réduisant le NOx (12) et est choisi parmi le magnésium, le calcium, le sodium, le potassium, le baryum, le lanthane, le strontium, le césium, le cérium, le lithium, et l'yttrium.

**11.** Dispositif selon l'une quelconque des revendications précédentes dans lequel le rapport volumique entre ledit matériau adsorbant et désorbant l'hydrocarbure (14) et le catalyseur adsorbant et réduisant le NOx (12) varie de 1:6 à 1:1.

**12.** Procédé selon l'une quelconque des revendications précédentes, dans lequel ledit gaz d'échappement s'échappe d'un moteur actionné avec un rapport air-carburant d'au moins 14,7, ledit gaz d'échappement ayant une concentration en oxygène d'au moins 5% et un rapport molaire hydrocarbures sur NOx allant jusqu'à 10.

# FIG.1

# FIG.2

# FIG.3

# FIG.4